# EUROPÄISCHE PATENTSCHRIFT

(11) **EP 4 030 617 B1**
(45) Veröffentlichungstag und Bekanntmachung des Hinweises auf die Patenterteilung: **12.03.2025**
(21) Anmeldenummer: 22150498.8
(22) Anmeldetag: 07.01.2022
(51) Int. Cl.: H02P 29/64, H02P 6/14

(54) **VERFAHREN ZUR THERMISCHEN ÜBERWACHUNG EINES BÜRSTENLOSEN MOTORS**
METHOD FOR THERMAL MONITORING OF A BRUSHLESS MOTOR
PROCÉDÉ DE SURVEILLANCE THERMIQUE D'UN MOTEUR SANS BALAI

(30) Priorität: 14.01.2021 BE 202105020
(43) Veröffentlichungstag der Anmeldung: 20.07.2022
(73) Patentinhaber: Miele & Cie. KG, 33332 Gütersloh (DE)
(72) Erfinder: Neufeld, Alexander, 33619 Bielefeld (DE)

(56) Entgegenhaltungen:
- DE-A1- 102013 202 969
- DE-A1- 102018 130 495
- US-A1- 2006 197 480

## Beschreibung

Die Erfindung betrifft ein Verfahren zur thermischen Überwachung eines mindestens zweiphasigen bürstenlosen Motors gemäß dem Patentanspruch 1.

Zu den elektrischen Antrieben gehören die Synchronmotoren als Einphasen- oder Drehstrom-Synchronmaschinen im Motorbetrieb. Der Rotor bzw. der Läufer weist eine konstante Magnetisierung auf, welche im Betrieb synchron von einem bewegten magnetischen Drehfeld im Stator mitgenommen wird, woraus sich die Dreh- bzw. Rotationsbewegung des Rotors innerhalb des Stators bzw. Ständers ergibt. Mit anderen Worten wird die, üblicherweise dreisträngige, Drehstromwicklung des Stators durch eine geeignete Schaltung derart angesteuert, dass seitens der Spulen des Stators ein wanderndes magnetisches Feld erzeugt wird, welches den Rotor mitzieht und hierdurch in Rotation versetzt. Die Dreh- bzw. Rotationsbewegung des Rotors des laufenden Synchronmotors ist dabei synchron zur Wechselspannung der Wicklungen des Stators. Die Drehzahl der Drehbewegung des Rotors ist über die Polpaarzahl der Wicklungen des Stators mit der Frequenz der Wechselspannung verknüpft.

Zum anderen kann das magnetische Feld des Rotors durch Permanentmagnete erzeugt werden, was als Selbsterregung bezeichnet wird. In diesem Fall kann auf die elektrische Kontaktierung zwischen Stator und Rotor verzichtet werden. Dies kann die zuvor genannten Nachteile vermeiden sowie insgesamt das Gewicht, den Bauraum und die Kosten derartiger permanenterregter Synchronmotoren geringhalten. Derartige permanenterregte Synchronmotoren mit einer schaltenden Elektronik werden daher üblicherweise auch als bürstenlose Motoren (Englisch: Brushless direct current motor - kurz: BLDC motor) bezeichnet. Die Spulenstränge des Stators können über einen Vierquadrantensteller angesteuert werden. Die Elektronik zur Ansteuerung der Brücke ist ein geregelter Frequenzumrichter. Üblicherweise werden bürstenlose Motoren dreiphasig ausgebildet, da sie dann den Vorteil einer definierten Läuferstellung bei hoher Dynamik, hohem Drehmoment und hoher Effizienz aufweisen.

Charakteristisch für bürstenlose Motoren ist ihre Kommutierung, welche zum Beispiel bei einem dreiphasigen Stator aus sechs Blöcken bzw. Sektoren pro Drehfelddurchlauf, d.h. pro Motorumdrehung, besteht, welche sich jeweils vom Schaltzustand der Brückenschaltung unterscheiden. Dabei sind immer lediglich zwei Gegentaktstufen der Brücke aktiv und die dritte Gegentaktstufe befindet sich im Zustand "floating". Die Spannung an diesem Brückenpunkt wird durch das Schaltungsnetz gemäß dem Stern-Ersatzschaltbild definiert. Die Brückensteuerung sorgt dafür, dass immer die Motorphase "floating" ist, welche - bei trapezoider Gegenspannung - gerade die Polarität wechselt.

Da die Brückensteuerung automatisch weiterschaltet, befindet sich das Statorfeld immer in dem Block mit der optimalen Magnetflussänderung, d.h. mit der maximalen Generatorspannung. Der bürstenlose Motor dreht somit hoch, bis seine Generatorspannung der Versorgungsspannung entspricht. Dann ist die maximale Drehzahl bzw. die Betriebsdrehzahl erreicht und wird konstant gehalten. Eine Steuerung bzw. Änderung der Drehzahl des Rotors kann somit über die Änderung der Versorgungsspannung erfolgen.

Die Steuerung der Kommutierung erfolgt in Abhängigkeit der aktuellen Rotorposition, welche über wenigstens einen Positionssensor zum Beispiel als Hall-Sensor erfasst werden kann, was jedoch zu einem entsprechenden zusätzlichen Aufwand bzw. zu entsprechenden Kosten führt sowie Bauraum erfordert.

Alternativ kann daher eine sensorlose Kommutierung umgesetzt und auf Positionssensoren verzichtet werden, indem die aktuelle Rotorposition indirekt durch die Messung von elektrischen Parametern an den Spulen gewonnen wird. Hierzu kann beispielsweise die in den Spulen des Stators ausgelöste EMK (elektromotorische Kraft) erfasst und von der elektronischen Steuerschaltung ausgewertet werden, was jedoch erst ab einer gewissen Mindestdrehzahl erfolgen kann.

Mit anderen Worten ist ein bürstenloser Motor (BLDC-Motor) konstruktiv gesehen eine Drehfeldmaschine, welche keinen mechanischen Kommutator benötigt. Der Rotor beinhaltet einen oder mehrere Permanentmagnete. Durch die Wechselwirkung zwischen Statorfeld und Rotorfeld entsteht ein elektrisches Moment, das zu einer Rotation führen kann.

Zum Betrieb eines bürstenlosen Motors ist üblicherweise ein Motorumrichter notwendig. Der Motorumrichter beinhaltet üblicherweise im Wesentlichen ein Controller sowie Leistungshalbleiter zur Ansteuerung der Motorphasen. Außerdem ist üblicherweise ein Zwischenkreis vorhanden, aus dem der bürstenlose Motor gespeist wird.

Anders als die unter dem Begriff permanenterregte Synchron-Maschinen (PMSM) oder PMAC bekannten Motoren werden bei einem bürstenlosen Motor z.B. jeweils nur zwei Phasen von drei gleichzeitig bestromt und die dritte Phase ist stromlos. Die Auswahl der zu bestromenden Phasen ist von der Rotorlage abhängig. Der Übergang von einem Sektor bzw. Block zum nächsten wird auch "elektronische Kommutierung" genannt; deswegen auch die Bezeichnung "brushless" oder "elektronisch kommutiert". Die für die Kommutierung eines bürstenlosen Motors notwendige Information über die Rotorlage wird üblicherweise über einen Lagesensor wie beispielsweise Hall-Sensoren, Resolver oder Inkrementalgeber gemessen.

Aus dem Stand der Technik sind verschiedene Lösungen bekannt, die diese Kommutierung ohne einen Lagesensor erlauben. Der am meisten verbreitete Ansatz der sensorlosen Ansteuerung basiert darauf, die Rotorlage und die Kommutierungszeitpunkte durch Messung der induzierten Spannung in der inaktiven Phase zu ermitteln. Die Spannungspotenziale der Motorphase und des Motorsternpunkts werden über Spannungsteiler miteinander verglichen und der Nullübergang wird als Referenzzeitpunkt für die Kommutierung genommen.

Bei bürstenlosen Motoren, bei denen der Sternpunkt nicht physikalisch herausgeführt ist (etwa bei einer Dreieck-Schaltung), kann ein Sternpunkt künstlich durch drei in Stern geschaltete Widerstände nachgebildet werden. Das Spannungspotenzial des künstlichen Sternpunkts wird dann anschließend mit dem Spannungspotenzial der inaktiven Phase, zum Beispiel über einen Komparator, verglichen. Der Nulldurchgang dieser Differenz wird als Referenzzeitpunkt für die Kommutierung genommen.

Bei derartigen bürstenlosen Motoren kann es zu einer Übererwärmung bzw. zu einer Überhitzung kommen, falls die Phasen seitens des geregelten Frequenzumrichters wie zuvor beschrieben bestromt werden, jedoch die hierdurch zu bewirkende Drehbewegung des Rotors mechanisch vollständig blockiert oder zumindest behindert wird. Letzteres kann auch auf einer Schwergängigkeit des Rotors bzw. des anzutreibenden mechanischen Elements beruhen. Ferner kann auch eine falsche bzw. fehlerhafte Ansteuerung des geregelten Frequenzumrichters dazu führen, dass die zu bewirkende Drehbewegung des Rotors gar nicht oder nur unzureichend erzeugt werden kann.

In jedem Fall kann die dennoch erfolgende Bestromung der Phasen zu einer Erwärmung der Spulen des Stators führen, welche dessen zulässige Temperatur übersteigen und somit den bürstenlosen Motor überhitzen kann. Dies kann zu Beschädigungen der Spulen, des geregelten Frequenzumrichters sowie weiterer elektronischer Elemente und ggfs. zu einem Ausfall des bürstenlosen Motors führen.

Dies kann insbesondere bei bürstenlosen Motoren der Fall sein, welche ein durch ihren Rotor antreibbares Lüfterrad besitzen, welches der Erzeugung eines Luftstroms während der Rotation des Rotors dient und hierdurch den bürstenlosen Motor selbst kühlen kann. Durch den Stillstand des Rotors fällt somit auch dessen eigene Luftkühlung aus bzw. wird bei zu geringer Drehzahl des Rotors entsprechend in ihrer Wirkung gemindert, so dass die gewünschte Wirkung der Luftkühlung nicht erreicht werden kann.

Daher ist es üblich, bei derartigen bürstenlosen Motoren eine thermische Überwachung vorzusehen und bei Erreichen einer vorbestimmten Grenztemperatur den bürstenlosen Motor selbsttätig abzuschalten oder zumindest in seiner Leistung zu reduzieren, um eine thermische Überlastung durch Übererwärmung bzw. durch Überhitzung zu vermeiden.

Derartige thermische Überwachungen werden üblicherweise indirekt umgesetzt, indem nicht die Temperatur des bürstenlosen Motors selbst sensorisch erfasst, sondern ein Temperatursensor in der Nähe des bürstenlosen Motors bzw. dessen Statorspulen vorgesehen wird, welcher die Umgebungstemperatur der Luft erfassen kann. Somit wird die Temperatur der Luft in der Umgebung der Spulen des Stators des bürstenlosen Motors sensorisch erfasst und auf deren Temperatur wie zuvor beschrieben reagiert.

Eine derartige indirekte Temperaturüberwachung kann üblicherweise einen ausreichenden Schutz vor Übererwärmung bzw. Überhitzung bei derartigen bürstenlosen Motoren bieten, falls auf eine langsame Erwärmung des bürstenlosen Motors reagiert werden soll, welche ausreichend Zeit hat, die Umgebungstemperatur zu erwärmen und so von dem Temperatursensor erfasst zu werden. Dies kann bei einer reduzierten Drehzahl des Rotors des bürstenlosen Motors der Fall sein.

Kommt es, zum Beispiel aufgrund eines Stillstands des Rotors des bürstenlosen Motors, zu einer sehr schnellen Erwärmung der Statorspulen des bürstenlosen Motors, so kann dies üblicherweise über die zuvor beschriebene indirekte thermische Überwachung nicht ausreichend schnell erkannt werden, um hierauf reagieren und Beschädigungen des bürstenlosen Motors vermeiden zu können. Dies ist dadurch begründet, dass die thermische Kopplung zwischen den Statorspulen des bürstenlosen Motors und dem Temperatursensor, welche üblicherweise über mehrere Zentimeter Umgebungsluft erfolgt, derart schlecht ist bzw. langsam erfolgt, dass die hierdurch bewirkte Zeitverzögerung zu groß ist, um die Übererwärmung bzw. die Übererhitzung der Spulen des bürstenlosen Motors ausreichend schnell sensorisch erfassen zu können, als dass hierauf durch Abschaltung des bürstenlosen Motors noch wirkungsvoll reagiert werden könnte.

Zu beachten ist ferner, dass der Temperatursensor in der Umgebung der Spulen des bürstenlosen Motors sowie dessen Elektronik zusätzliche Kosten verursacht sowie Bauraum erfordert.

Die US2006197480A1 offenbart eine Ansteuerschaltung für einen bürstenlosen Elektromotor ohne Rotorlagesensor, umfassend eine Schaltung zur Erfassung der Motorsternpunktspannung und einen zu einem Rotorlageermittler gehörenden Komparator, der die Sternpunktspannung mit einer Bezugsspannung vergleicht.

Der Erfindung stellt sich das Problem, ein Verfahren zur thermischen Überwachung eines mindestens dreiphasigen bürstenlosen Motors der eingangs beschriebenen Art bereitzustellen, so dass dessen Übererwärmung ausreichend schnell erkannt werden kann, um hierauf wirkungsvoll reagieren zu können. Dies soll insbesondere möglichst einfach, kostengünstig und flexibel umgesetzt werden können. Insbesondere soll dies ohne Temperatursensor erfolgen können. Zumindest soll eine Alternative zu bekannten derartigen Verfahren geschaffen werden.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Verfahren zur thermischen Überwachung eines mindestens zwei- bevorzugt dreiphasigen bürstenlosen Motors, vorzugsweise ohne Rotorlagesensor, mit wenigstens den Schritten:
- Bestromen des Motors, wobei die Phasenspannung des Bestromens vorzugsweise mittels PWM-Steuerung eingestellt wird,
- Erfassen der Sternpunktspannung und
- Vergleichen der erfassten Sternpunktspannung mit einem vorbestimmten Grenzwert.

Erfindungsgemäß wird im Betrieb des bürstenlosen Motors dessen Sternpunktspannung ermittelt und mit einem Grenzwert verglichen. Der weitere Betrieb kann dann in Abhängigkeit des Vergleichens dahingehend erfolgen, dass der Betrieb des bürstenlosen Motors fortgesetzt oder eingestellt wird, um eine Übererwärmung bzw. Überhitzung zu vermeiden.

Der Erfindung liegt dabei die Erkenntnis zugrunde, dass bei einem normalen Betrieb des bürstenlosen Motors mit drehendem Rotor die Sternpunktspannung stets signifikant geringer ist als bei einem bestromten bürstenlosen Motor mit stehendem Rotor. In diesem Fall springt die Sternpunktspannung nämlich zwischen dem Nullpotenzial und der vollen Höhe der Zwischenkreisspannung hin und her, während die Sternpunktspannung bei bestromtem bürstenlosen Motor mit drehendem Rotor deutlich unterhalb der Zwischenkreisspannung bleibt.

Wird somit erfindungsgemäß die Sternpunktspannung erfasst und mit einem Grenzwert verglichen, welcher unterhalb der Zwischenkreisspannung liegt und die zuvor beschriebene Unterscheidung ermöglichen kann, so kann basierend auf der erfassten Sternpunktspannung zumindest zwischen den Zuständen des bestromten bürstenlosen Motors mit drehendem Rotor und des bestromten bürstenlosen Motors mit stehendem Rotor unterschieden werden. Dies kann zur thermischen Überwachung des bestromten bürstenlosen Motors genutzt werden, indem im Falle, dass ein stehender Rotor trotz Bestromung des bürstenlosen Motors erkannt wird, das Bestromen beendet wird. Hierdurch können die Spulen des Stators des bürstenlosen Motors vor Übererwärmung bzw. vor Überhitzung geschützt werden.

Das Verfahren weist daher die weiteren nachfolgenden Schritte auf:
- falls beim Vergleichen die Sternpunktspannung unterhalb des vorbestimmten Grenzwerts liegt, Fortsetzen des Bestromens, oder
- falls beim Vergleichen die Sternpunktspannung bei dem oder oberhalb dem vorbestimmten Grenzwert liegt, Erfassen eines Fehlerzustands.

Auf diese Art und Weise können die entsprechenden zuvor beschriebenen Aspekte der Erfindung konkret umgesetzt und genutzt werden. Das Fortsetzen des Bestromens kann alternativ durch das Erfassen eines Normalzustands ergänzt oder ersetzt werden.

Auf das Erkennen eines Fehlerzustands, der einen Stillstand des Motors trotz Bestromen anzeigen kann, kann durch sofortiges Beenden der Bestromung reagiert werden. Alternativ kann aber auch beispielsweise eine Karenzzeit abgewartet werden, um dem Motor die Gelegenheit zu geben, den normalen Betrieb aufzunehmen oder fortzusetzen. Da eine Übererwärmung normalerweise nicht unmittelbar auftritt, kann das vertretbar sein.

Gemäß der Erfindung erfolgt eine Reaktion auf das Vergleichen erst, falls das Ergebnis des Vergleichens über einen vorbestimmten Zeitraum oder eine vorbestimmte Anzahl von Malen vorliegt. Erfolgt das Bestromen der Phasen dabei pulsartig zum Beispiel mittels Pulsweitenmodulation (PWM), so ist hiervon auch umfasst, dass die unmittelbar aufeinanderfolgenden PWM-Pulse über den vorbestimmten Zeitraum betrachtet werden, d.h. ohne Berücksichtigung der dazwischenliegenden Zeiträume, in denen keine Pulse vorliegen.

Auf diese Art und Weise kann verhindert werden, dass das einmalige Erreichen oder Überschreiten des vorbestimmten Grenzwertes bereits zu einem Beenden des Bestromens des bürstenlosen Motors führt, da ein derartiges einmaliges Ereignis z.B. durch Messfehler begründet sein kann. Vielmehr muss das Vergleichen über den vorbestimmten Zeitraum z.B. durchgängig dasselbe Ergebnis liefern oder eine bestimmte Anzahl von Überschreitungen des Grenzwerts auftreten, um ein Beenden des Bestromens des bürstenlosen Motors auszulösen. Somit kann verhindert werden, dass das Beenden des Bestromens des bürstenlosen Motors ungerechtfertigt erfolgt. Hierdurch kann die Verlässlichkeit bzw. die Robustheit des erfindungsgemäßen Verfahrens erhöht werden.

Gemäß einem weiteren Aspekt der Erfindung erfolgt nach dem Erfassen und vor dem Vergleichen der weitere Schritt:
- Berücksichtigen der erfassten Überschreitungen des Grenzwerts durch die Sternpunktspannung über einen vorbestimmten Zeitraum,
wobei das Vergleichen basierend auf der Berücksichtigung erfolgt.

Hierdurch können die zuvor beschriebenen Eigenschaften und Vorteile alternativ durch eine Berücksichtigung über den vorbestimmten Zeitraum umgesetzt werden, um auch auf diese Art und Weise auszuschließen, dass ein einmaliges Ereignis eines Messfehlers ein Beenden des Bestromens des bürstenlosen Motors auslösen könnte.

Beispielsweise kann darauf abgestellt werden, dass eine bestimmte maximale Anzahl an Grenzwertüberschreitungen erfolgt, oder dass eine bestimmte Anzahl von Grenzwertüberschreitungen pro Zeiteinheit auftritt, bevor ein Fehlerzustand erkannt wird.

Gemäß einem weiteren Aspekt der Erfindung erfolgt das Vergleichen erst nach einem vorbestimmten Zeitraum, welcher länger als der Zeitraum des Hochfahrens des bürstenlosen Motors ist. Hierdurch kann ferner ausgeschlossen werden, dass das erfindungsgemäße Verfahren wie zuvor beschrieben ein gewolltes Hochfahren bzw. Anlaufen des bürstenlosen Motors fälschlicherweise als ungewollten Stillstand einstuft und diesem entgegenwirkt.

Gemäß einem weiteren Aspekt der Erfindung ist der vorbestimmte Grenzwert ein prozentualer Wert der Zwischenkreisspannung. Diesem Aspekt der Erfindung liegt die Erkenntnis zugrunde, dass bei einem bestromten bürstenlosen Motor mit stehendem Rotor die Sternpunktspannung zwischen dem Nullpotenzial und der vollen Höhe der Zwischenkreisspannung hin und her springt. Wird somit der vorbestimmte Grenzwert prozentual zum Wert der Zwischenkreisspannung gewählt, so kann auf einfache Art und Weise ein Grenzwert vorbestimmt werden, welcher zur Unterscheidung wie zuvor beschrieben verwendet werden kann. Der Grenzwert liegt bevorzugt zwischen 70 und 90%, am meisten bevorzugt bei etwa 80% der vollen Höhe der Zwischenkreisspannung.

Die folgenden Ausführungsformen einer Ansteuerungsvorrichtung, eines bürstenlosen Motors und eines Haushaltsgeräts sind nicht erfindungsgemäß und dienen lediglich der Veranschaulichung.

Beschrieben wird eine Ansteuerungsvorrichtung zur thermischen Überwachung eines mindestens zwei- bevorzugt dreiphasigen bürstenlosen Motors, vorzugsweise ohne Rotorlagesensor, gemäß einem Verfahren wie zuvor beschrieben, mit einer Steuerungseinheit, welche ausgebildet ist, den Motor zu bestromen, wobei die Phasenspannung des Bestromens vorzugsweise mittels PWM-Steuerung eingestellt wird, und mit einer Abtasteinrichtung, welche ausgebildet ist, die Sternpunktspannung der bestromten Phasen zu erfassen, wobei die Steuerungseinheit ferner ausgebildet ist, die erfasste Sternpunktspannung mit einem vorbestimmten Grenzwert zu vergleichen.

Hierdurch kann eine Ansteuerungsvorrichtung bereitgestellt werden, um die entsprechenden zuvor beschriebenen Aspekte der Erfindung bzw. um das erfindungsgemäße zuvor beschriebene Verfahren bei einem mindestens zweiphasigen bürstenlosen Motor umzusetzen.

Beschrieben wird ein mindestens zweiphasiger bürstenloser Motor, vorzugsweise ohne Rotorlagesensor, mit einer Ansteuerungsvorrichtung wie zuvor beschrieben. Hierdurch kann ein mindestens zweiphasiger bürstenloser Motor bereitgestellt werden, um die zuvor beschriebenen Aspekte der Erfindung bzw. um das erfindungsgemäße zuvor beschriebene Verfahren umzusetzen.

Beschrieben wird ein Haushaltsgerät mit mindestens einem mindestens zweiphasigen bürstenlosen Motor wie zuvor beschrieben. Hierdurch kann ein Haushaltsgerät bereitgestellt werden, um die zuvor beschriebenen Aspekte der Erfindung bzw. um das erfindungsgemäße zuvor beschriebene Verfahren umzusetzen.

Das Haushaltsgerät kann einen, vorzugsweise wiederaufladbaren, elektrischen Energiespeicher aufweisen und ausgebildet sein, mittels der gespeicherten elektrischen Energie des elektrischen Energiespeichers betrieben zu werden. Hierdurch kann die vorliegende Erfindung insbesondere bei derartigen Haushaltsgeräten umgesetzt und genutzt werden.

Ein Ausführungsbeispiel der Erfindung ist in den Zeichnungen rein schematisch dargestellt und wird nachfolgend näher beschrieben. Es zeigt
- Figur 1: eine Schaltung eines bekannten bürstenlosen Motors;
- Figur 2: Verläufe der Phasenspannungen der drei Phasen des bürstenlosen Motors der Figur 1;
- Figur 3: ein Diagramm der Sternpunktspannung eines bestromten bürstenlosen Motors mit drehendem Rotor über der Zeit;
- Figur 4: ein Diagramm der Sternpunktspannung eines bestromten bürstenlosen Motors mit stehendem Rotor über der Zeit;
- Figur 5: das Diagramm der Figur 3 mit vorbestimmtem Grenzwert;
- Figur 6: eine Schaltung eines bürstenlosen Motors; und
- Figur 7: ein Ablaufdiagramm eines erfindungsgemäßen Verfahrens.

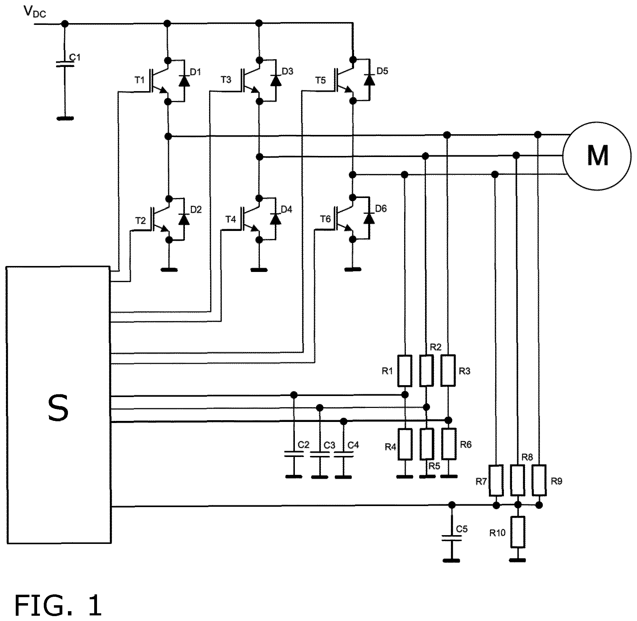

Figur 1 zeigt eine Schaltung eines bekannten bürstenlosen Motors M. Der bürstenlose Motor M, kurz BLDC-Motor M, wird über eine Steuerungseinheit S in Form eines geregelten Frequenzumrichters S angesteuert bzw. betrieben. Aus einer Gleichspannung V_{DC} als Zwischenkreisspannung V_{DC} wird über eine B6-Brücke mit sechs Transistoren T1-T6 und sechs Dioden D1-D6 ein dreiphasiges Drehfeld an den BLDC-Motor M gelegt. Hierdurch wird eine Rotation eines Rotors (nicht dargestellt) des BLDC-Motors M im Betrieb bewirkt.

Damit das Drehfeld, welches auf den Stator (nicht dargestellt) des BLDC-Motors M gegeben wird, passend zur Rotorlage ist, muss die Rotorlage bestimmt werden. In der Vergangenheit wurde dies über einen Sensor am BLDC-Motor M getan. Mit dem Aufkommen der sensorlosen Regelung wurde der Sensor durch die Messung elektrischer Größen in Kombination mit einem Software-Motormodell seitens der Steuerungseinheit S ersetzt. Zu diesem Zweck wurden die Phasenspannungen U_{Phase} der drei Phasen U, V, W und auch die Sternpunktspannung gemessen. Die Sternpunktspannung kann entweder am Sternpunkt des BLDC-Motors M gemessen oder über einen "künstlichen Sternpunkt" nachgestellt und gemessen werden. Die Schaltung der ohmschen Widerstände R8-R10 und des Kondensators C5 stellt den künstlichen Sternpunkt dar. Bei einem BLDC-Motor M mit Dreieckschaltung wird üblicherweise nur mit dem künstlichen Sternpunkt gearbeitet.

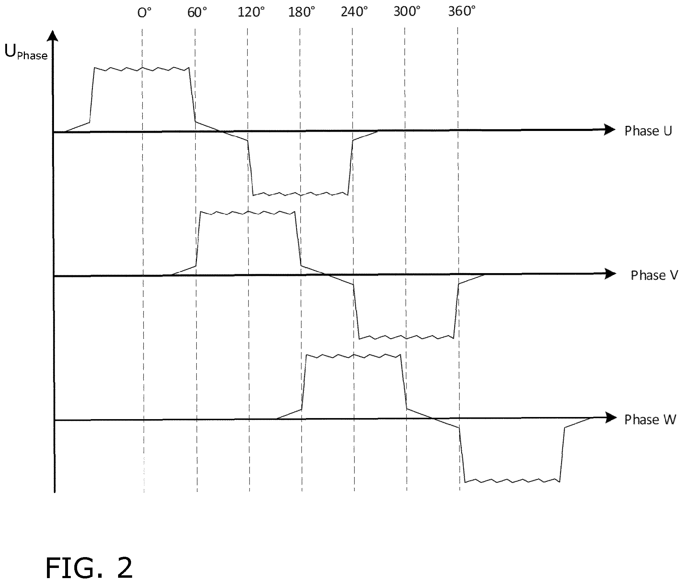

Figur 2 zeigt die Verläufe der Phasenspannungen U_{Phase} der drei Phasen U, V, W des bürstenlosen Motors M der Figur 1. Wie dem zeitlichen Verlauf der Phasenspannung U_{Phase} der Phase U zu entnehmen ist, so wird die Phase U 120° (zwei Sektoren) lang mit einer positiven Spannung aktiv beaufschlagt. Einen Sektor lang ist die Phase U stromlos und "floating". In dieser Zeit kann die induzierte Spannung EMK der Phase U gemessen werden, welche auch als elektromotorische Kraft (EMK, auch electromotive force emf) bezeichnet wird.

Die Nulllinie bei der Phasenspannung U_{Phase} ist die Sternpunktspannung. Dort, wo die Phasenspannung U_{Phase} die Sternpunktspannung kreuzt, liegt ein sogenannter Nulldurchgang der jeweiligen Phasenspannung U_{Phase} vor. Dieser Zeitpunkt des Nulldurchgangs der Phasenspannung U_{Phase} ist der Moment, wo der Stator und der Rotor zueinander ausgerichtet sind. Auf diese Nulldurchgänge wird gemessen. Somit kann in der Phase U bei einem einpoligen BLDC-Motor M zwei Mal ein Nulldurchgang während einer mechanischen Umdrehung (0° bis 360°) gemessen werden. Misst man in allen drei Phasen U, V, W den Strom, so kann während einer mechanischen Umdrehung sechs Mal die Rotorlage bestimmt werden. Auf diesem Prinzip bauen alle Steuerungseinheiten S von herkömmlichen BLDC-Motoren M auf.

Derartige BLDC-Motoren M werden üblicherweise auf eine übermäßige Erwärmung bzw. Überhitzung überwacht, d.h. es findet üblicherweise ein thermischer Schutz des BLDC-Motors M statt. Wenn der BLDC-Motor M nämlich zum Beispiel blockiert ist und trotzdem bestromt wird, so kann dies zu sehr hohen Strömen in den Spulen des Stators und damit zu einer Übererwärmung des BLDC-Motors M führen. Wenn der BLDC-Motor M dreht, so wird eine Spannung in den Wicklungen des Stators induziert, welche als induzierte Spannung EMK bezeichnet werden kann. Diese induzierte Spannung EMK sorgt dafür, dass der Strom in der Wicklung des Stators begrenzt wird. Wenn der BLDC-Motor **M** steht, weil der BLDC-Motor M zum Beispiel sehr schwergängig ist und trotzdem bestromt wird, kann dies zu sehr hohen Strömen und damit zu einer Übererwärmung der Wicklung des Stators führen.

Somit ist die Information, ob der Rotor des BLDC-Motors M dreht oder steht bzw. nur sehr langsam dreht, sehr hilfreich für den Thermoschutz. Wenn der BLDC-Motor nämlich M trotz der Ansteuerung bzw. des Bestromens der Phasen U, V, W nicht hochläuft, so sollte der BLDC-Motor M nach kurzer Zeit abgeschaltet werden, damit der BLDC-Motor M nicht überhitzt wird. Somit ist es vorteilhaft, einen Stillstand des BLDC-Motors M zu erkennen.

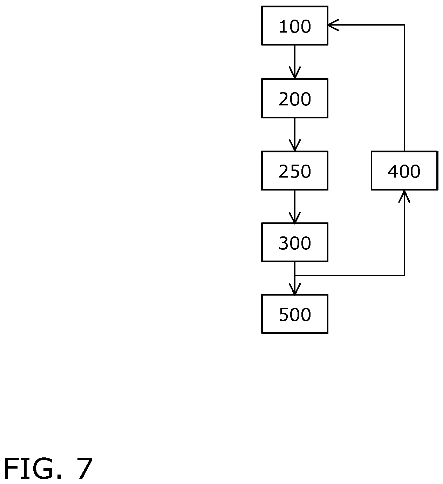

Erfindungsgemäß kann zur Verhinderung einer thermischen Überlastung eines BLDC-Motors M daher ein Verfahren wie in Figur 7 gezeigt dahingehend durchgeführt werden, dass ein Bestromen 100 von zwei Phasen U, V, W erfolgt, wobei die Phasenspannung U_{Phase} des Bestromens 100 mittels PWM-Steuerung eingestellt wird. Es erfolgt ferner ein Erfassen 200 der Sternpunktspannung der bestromten Phasen U, V, W und ein Berücksichtigung 250 der erfassten Sternpunktspannung über einen vorbestimmten Zeitraum, um Messschwankungen bzw. Messfehler auszugleichen. Es erfolgt ein Vergleichen 300 der erfassten Sternpunktspannung mit einem vorbestimmten Grenzwert, welcher ein prozentualer Wert der Zwischenkreisspannung V_{DC} ist. Beispielsweise kann dabei darauf abgestellt werden, dass eine bestimmte maximale Anzahl an Grenzwertüberschreitungen erfolgt, oder dass eine bestimmte Anzahl von Grenzwertüberschreitungen pro Zeiteinheit auftritt, bevor ein Fehlerzustand erkannt wird.

Falls beim Vergleichen 300 festgestellt wird, dass die Sternpunktspannung entsprechend der vorstehend genannten Kriterien unterhalb des vorbestimmten Grenzwerts liegt, so erfolgt ein Fortsetzen 400 des Bestromens 100, da hieraus auf einen sich tatsächlich drehenden Rotor des BLDC-Motors M geschlossen werden kann. Falls jedoch beim Vergleichen 300 festgestellt wird, dass die Sternpunktspannung bei dem oder oberhalb des vorbestimmten Grenzwerts liegt, d.h. den vorbestimmten Grenzwert erreicht oder überschreitet, so erfolgt das Feststellen eines Fehlerzustands, wobei eine Reaktion darauf ein Beenden 500 des Bestromens 100 der zwei Phasen U, V, W sein kann, da hierdurch auf einen trotz Bestromung stehenden Rotor des BLDC-Motors M geschlossen werden kann. Da in diesem Fall das weitere Bestromen 100 zu einer Überhitzung der Spulen des Stators des BLDC-Motors M führen kann, wird das Bestromen 100 beendet und hierdurch eine thermische Überlastung des BLDC-Motors M verhindert. Erfindungsgemäß kann auf diese Art und Weise ein thermischer Überlastungsschutz bzw. eine thermische Überwachung des BLDC-Motors M umgesetzt werden.

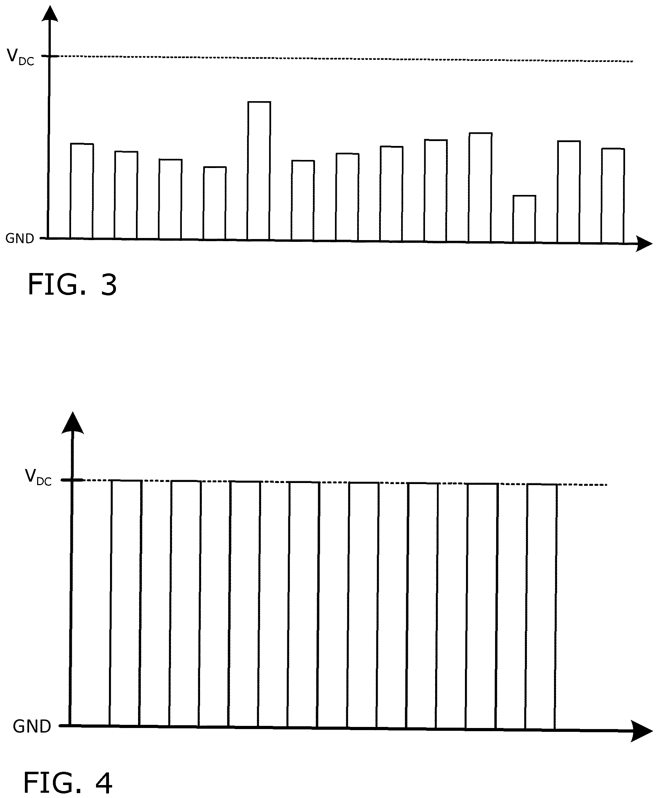

Der Erfindung liegt dabei die Erkenntnis zugrunde, dass bei einem BLDC-Motor M die Sternpunktspannung wie in der Figur 3 dargestellt verläuft, wenn der BLDC-Motor M bestromt wird und sich dessen Rotor bestimmungsgemäß dreht. In diesem Fall kann sich der Sternpunkt potenzialmäßig nur zwischen GND und der Zwischenkreisspannung V_{DC} bzw. der Busspannung (Spannung am Kondensator C1, siehe zum Beispiel Figur 1) bewegen. Da die Phasen über ein getaktetes Signal angesteuert werden, ändert sich auch das Potenzial des Sternpunktes mit der Taktfrequenz. Wird der BLDC-Motor M zum Beispiel mit 16kHz angesteuert, so sieht man die 16kHz auch am Sternpunkt.

Wenn sich der BLDC-Motor M dreht, so variiert die Höhe der Pulse am Sternpunkt mit der Rotorlage des BLDC-Motors M. Die Breite der Pulse variiert mit der Stromhöhe in der Phase. Charakteristisch ist aber beim drehenden BLDC-Motor M, dass die Pulse niemals an die Zwischenkreisspannung V_{DC} herankommen, sondern immer in einem gewissen Abstand darunterbleiben.

Im Gegensatz hierzu pendelt bei einem stehenden BLDC-Motor M die Sternpunktspannung zwischen der Busspannung und dem GND, siehe Figur 4. Der Grund für den unterschiedlichen Verlauf ist die EMK bzw. die induzierte Spannung EMK des BLDC-Motors M. Beim stehenden BLDC-Motor M ist die EMK Null, beim drehenden BLDC-Motor M ist die EMK immer vorhanden. Je nach Drehzahl ändert sich die EMK.

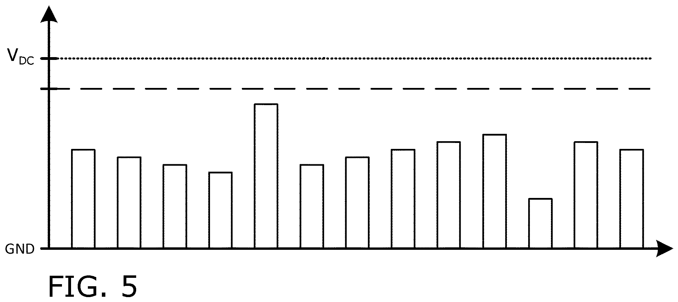

Erfindungsgemäß können daher diese beiden Signalformen am Sternpunkt voneinander unterschieden und dementsprechend der BLDC-Motor M abgeschaltet oder weiter betrieben werden. Dies kann auf einfache Art und Weise dadurch umgesetzt werden, indem eine Grenzlinie in den Verlauf der Busspannung integriert wird, siehe die gestrichelte Linie der Figur 5. Wenn die Spannungspulse am Sternpunkt dauerhaft unter der Grenzlinie sind, so dreht der BLDC-Motor M. Sind die Pulse am Sternpunkt dauerhaft/eine bestimmte Anzahl von Malen oberhalb der Grenzlinie, so steht der BLDC-Motor M trotz Bestromung.

Die Entscheidung, ob der BLDC-Motor M bzw. dessen Rotor dreht oder steht, wird nicht in Abhängigkeit von einem oder zehn Spannungspulsen, sondern bevorzugt von einer großen Anzahl an Spannungspulsen gemacht, um eine Reaktion auf Messfehler zu vermeiden.

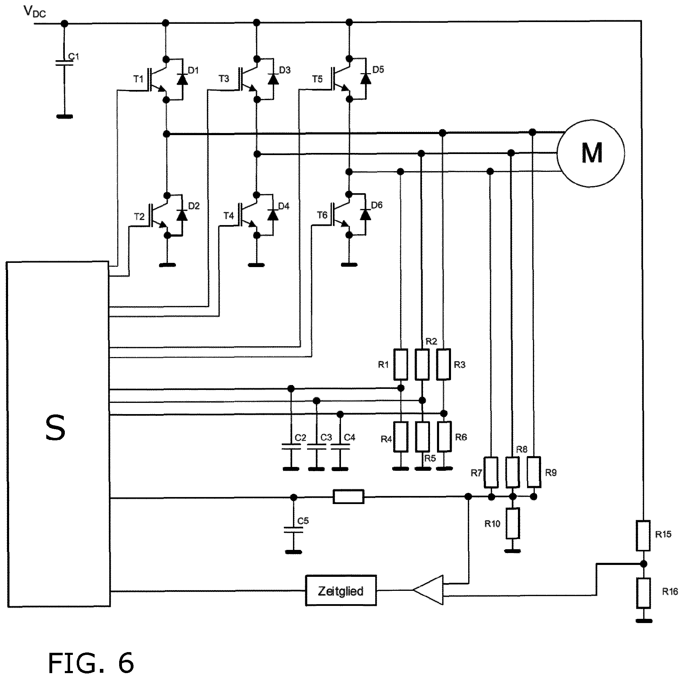

Die Auswertung der Spannungspulse kann über einen Komparator realisiert werden, siehe Figur 6. Die erwähnten Sternpunktspannungspulse werden auf den Komparator gegeben. Der Grenzwert ist der prozentuale Wert der Busspannung und ist immer relativ zur Busspannung. Der Grenzwert kann, wie in der Figur 6 dargestellt, mithilfe eines Spannungsteilers gebildet werden. Den Vergleich der beiden Größen macht der Komparator.

Das Zeitglied dahinter sorgt dafür, dass die Entscheidung nicht von einem Spannungspuls abhängig gemacht wird, sondern das Zeitglied mittelt über eine festgelegte Zeit.

Die Funktion des Zeitgliedes ist auch, den Hochlauf eines BLDC-Motors M auszublenden. Jeder Motorhochlauf beginnt mit einem stehenden Rotor. Die kurze Zeit des Hochfahrens muss ausgeblendet werden und darf nicht zum Abschalten des BLDC-Motors M führen.

Somit hat das Zeitglied eine doppelte Funktion: Hochlauf ausblenden und die Erkennung, ob der BLDC-Motors M steht oder dreht, zeitlich zu verzögern.

### Bezugszeichenliste (Bestandteil der Beschreibung)

- C1-C7: Kondensatoren
- D1-D6: Dioden der B6-Brücke
- T1-T6: Transistoren der B6-Brücke
- R1-R13: ohmsche Widerstände
- GND: Erdungspotenzial; Nullpotenzial
- V_{DC}: Zwischenkreisspannung
- U: Phase
- V: Phase
- W: Phase
- U_{Phase}: Phasenspannung
- EMK: induzierte Spannung; elektromotorische Kraft
- M: (dreiphasiger) bürstenloser Motor; BLDC-Motor
- S: Steuerungseinheit; Rechner; geregelter Frequenzumrichter

- 100: Bestromen von zwei Phasen U, V, W
- 200: Erfassen der Sternpunktspannung der bestromten Phasen U, V, W
- 250: Mitteln der erfassten Sternpunktspannung über einen vorbestimmten Zeitraum
- 300: Vergleichen der erfassten Sternpunktspannung mit einem vorbestimmten Grenzwert
- 400: Fortsetzen des Bestromens 100
- 500: Beenden des Bestromens 100

## Patentansprüche

1. Verfahren zur thermischen Überwachung eines mindestens zweiphasigen bürstenlosen Motors (M), vorzugsweise ohne Rotorlagesensor, mit wenigstens den Schritten:
• Bestromen (100) des Motors (M), wobei die Phasenspannung (UPhase) des Bestromens (100) vorzugsweise mittels PWM-Steuerung eingestellt wird,
• Erfassen (200) der Sternpunktspannung,
• Vergleichen (300) der erfassten Sternpunktspannung mit einem vorbestimmten Grenzwert, und
• falls beim Vergleichen (300) die Sternpunktspannung unterhalb des vorbestimmten Grenzwerts liegt, Fortsetzen (400) des Bestromens (100), **dadurch gekennzeichnet, daß**,
• falls beim Vergleichen (300) die Sternpunktspannung bei dem oder oberhalb des vorbestimmten Grenzwerts liegt, Erfassen eines Fehlerzustands, und eine Reaktion auf das Vergleichen (300) erst erfolgt, falls das Ergebnis des Vergleichens (300) über einen vorbestimmten Zeitraum oder eine vorbestimmte Anzahl von Malen vorliegt.

2. Verfahren nach Anspruch 1, **gekennzeichnet durch** den weiteren Schritt nach dem Erfassen (200) und vor dem Vergleichen (300):
Berücksichtigen (250) der erfassten Überschreitungen des Grenzwerts durch die Sternpunktspannung über einen vorbestimmten Zeitraum,
wobei das Vergleichen (300) basierend auf der Berücksichtigung erfolgt.

3. Verfahren nach einem der vorangehenden Ansprüche, **dadurch gekennzeichnet, dass** das Vergleichen (300) erst nach einem vorbestimmten Zeitraum erfolgt, welcher länger als der Zeitraum des Hochfahrens des bürstenlosen Motors (M) ist.

4. Verfahren nach einem der vorangehenden Ansprüche, **dadurch gekennzeichnet, dass** der vorbestimmte Grenzwert ein prozentualer Wert kleiner 100%, bevorzugt zwischen 70 und 90%, am meisten bevorzugt etwa 80%, der Zwischenkreisspannung (VDC) ist.

5. Verfahren nach einem der vorangehenden Ansprüche, **dadurch gekennzeichnet, dass** bei Erfassen eines Fehlerzustands die Bestromung beendet wird (500).

## Claims

1. Method for thermally monitoring an at least two-phase brushless motor (M), preferably without a rotor position sensor, the method comprising at least the steps of:
• energising (100) the motor (M), wherein the phase voltage (UPhase) of the energisation (100) is preferably adjusted by means of PWM control,
• detecting (200) the star point voltage,
• comparing (300) the detected star point voltage with a predetermined threshold value, and
• continuing (400) the energisation (100) if, during comparison (300), the star point voltage is below the predetermined threshold value,
**characterised in that,**
• an error condition is detected if, during the comparison (300), the star point voltage is at or above the predetermined threshold value, and a response to the comparison (300) occurs only if the result of the comparison (300) is present over a predetermined period of time or a predetermined number of times.

2. Method according to claim 1, **characterised by** the further step, after detecting (200) and before comparing (300), of:
considering (250) the detected instances of the star point voltage exceeding the threshold value over a predetermined period of time,
the comparison (300) being based on the consideration.

3. Method according to any of the preceding claims,
**characterised in that** the comparison (300) takes place only after a predetermined period of time, which is longer than the start-up period of the brushless motor (M).

4. Method according to any of the preceding claims,
**characterised in that** the predetermined threshold value is a percentage value less than 100%, preferably between 70 and 90%, most preferably approximately 80%, of the intermediate circuit voltage (VDC).

5. Method according to any of the preceding claims, **characterised in that,** when an error condition is detected, the energisation is terminated (500).

## Revendications

1. Procédé pour la surveillance thermique d'un moteur (M) sans balais à au moins deux phases, de préférence sans capteur de position de rotor, comportant au moins les étapes consistant à :
• alimenter en courant (100) le moteur (M), dans lequel la tension de phase (UPhase) de l'alimentation en courant (100) est de préférence réglée au moyen d'une commande MIL,
• détecter (200) la tension de point neutre,
• comparer (300) la tension de point neutre détectée avec une valeur limite prédéterminée, et
• si, lors de la comparaison (300), la tension de point neutre est inférieure à la valeur limite prédéterminée, poursuivre (400) l'alimentation en courant (100), **caractérisé en ce que**
• si, lors de la comparaison (300), la tension de point neutre est égale ou supérieure à la valeur limite prédéterminée, détecter un état d'erreur, et une réaction à la comparaison (300) n'est effectuée que si le résultat de la comparaison (300) est présent pendant une période prédéterminée ou un nombre prédéterminé de fois.

2. Procédé selon la revendication 1, **caractérisé par** l'étape supplémentaire après la détection (200) et avant la comparaison (300) consistant à :
prendre en compte (250) les dépassements détectés de la valeur limite par la tension de point neutre sur une période prédéterminée,
dans lequel la comparaison (300) est effectuée sur la base de la prise en compte.

3. Procédé selon l'une des revendications précédentes, **caractérisé en ce que** la comparaison (300) n'est effectuée qu'après une période prédéterminée qui est plus longue que la période de démarrage du moteur (M) sans balais.

4. Procédé selon l'une des revendications précédentes,
**caractérisé en ce que** la valeur limite prédéterminée est un pourcentage inférieur à 100 %, de préférence compris entre 70 et 90 %, de manière particulièrement préférée d'environ 80 %, de la tension de circuit intermédiaire (VDC).

5. Procédé selon l'une des revendications précédentes,
**caractérisé en ce que,** lorsqu'un état d'erreur est détecté, l'alimentation en courant est arrêtée (500).
